# EUROPÄISCHE PATENTSCHRIFT

(11) **EP 3 186 864 B1**
(45) Veröffentlichungstag und Bekanntmachung des Hinweises auf die Patenterteilung: **30.06.2021**
(21) Anmeldenummer: 16718706.1
(22) Anmeldetag: 27.04.2016
(51) Int. Cl.: H02H 1/00, H01H 83/20

(54) **AUSLÖSUNG EINES STÖRLICHTBOGENSCHUTZSYSTEMS**
TRIGGERING OF AN ARC FLASH PROTECTION SYSTEM
DÉCLENCHEMENT D'UN SYSTÈME DE PROTECTION CONTRE DES ARCS ÉLECTRIQUES PARASITES

(30) Priorität: 28.04.2015 DE 102015207802
(43) Veröffentlichungstag der Anmeldung: 05.07.2017
(73) Patentinhaber: Dehn + Söhne GmbH + Co. KG, 92318 Neumarkt (DE)
(72) Erfinder: SCHUMACHER, Andreas, 53547 Dattenberg (DE); PILSL, Wolfgang, 93107 Thalmassing (DE); ZIEHMER, Rainer, 91154 Roth (DE)
(74) Vertreter: Isarpatent
(86) Internationale Anmeldenummer: PCT/EP2016/059410
(87) Internationale Veröffentlichungsnummer: WO 2016/174092

(56) Entgegenhaltungen:
- WO-A1-2014/042941
- DE-A1- 2 216 238
- DE-A1- 19 514 580
- JP-A- S60 198 011
- US-A1- 2010 073 830
- US-A1- 2014 055 886
- US-A1- 2014 192 458

## Beschreibung

Die Erfindung betrifft ein Verfahren zur Auslösung eines Störlichtbogenschutzsystems und eine entsprechende Schaltanlage mit einem Störlichtbogenschutzsystem und einer Vorrichtung zur Auslösung eines Störlichtbogenschutzsystems gemäß dem Oberbegriff der unabhängigen Ansprüche 1 bzw. 10, wie aus der US 2014 / 055886 A1 bekannt.

Ein Lichtbogen ist eine sich selbst erhaltende Gasentladung und entsteht zwischen zwei Polen, wenn es zwischen ihnen bei einer entsprechend hohen Spannungsdifferenz zu einem Überschlag kommt. Befindet sich zwischen den Polen ein Gas, so wird dies durch den Überschlag ionisiert. Das entstehende Plasma leitet dabei weiterhin Strom.

In elektrischen Schaltanlagen kann es durch immer höhere Leistungsdichten, Fehlschaltungen, Fehlhandlungen des Bedienpersonals, Überspannungen, Isolationsfehlern oder Geräteversagen zur Ausbildung von Störlichtbögen kommen. Um Verletzungen von Personen und Materialschäden durch Störlichtbögen zu reduzieren, ist es bekannt, in der Verteilung von Elektrizität Lichtbogenerkennungseinrichtungen einzusetzen, die vorgeordnete Leistungsschalter zur schnellen Abschaltung veranlassen oder Störlichtbogen-Schutzvorrichtungen ansteuern, die einen definierten Kurzschluss verursachen, der jedoch für Personen und Anlage unschädlich ist.

Leistungsschalter sind für hohe Ströme ausgelegte Schalter. Sie können nicht nur Betriebsströme und geringe Überlastströme schalten, sondern auch bei Fehlern hohe Überlastströme und Kurzschlussströme einschalten, diese Fehlerströme eine vorgegebene Zeit führen und sicher ausschalten. Leistungsschalter werden einpolig, zweipolig, dreipolig oder vierpolig und als offene oder kompakte Schalter gebaut.

Dabei ist ein offener Leistungsschalter überwiegend in metallischer Umhüllung ausgeführt, während bei einem kompakten Leistungsschalter in der Regel ein Isolierstoffgehäuse realisiert ist.

Durch die Verwendung eines Störlichtbogenschutzsystems wird die Brenndauer eines Störlichtbogens auf bis zu einem Zehntel, teilweise auch mehr reduziert, so dass große Schäden vermieden und die Verfügbarkeit der Schaltanlage erhöht werden kann.

Aus der deutschen Offenlegungsschrift DE 10 2007 022 401 A1 ist es bekannt, einen Leistungsschalter zum Zweck des Störlichtbogenschutzes in einer Niederspannungsschaltanlage zu ertüchtigen. Der Leistungsschalter wird mit einer auf einen in der Schaltanlage entstehenden Störlichtbogen reagierende Überstromauswerteeinrichtung ausgerüstet. Ein von dem Lichtbogenüberwachungssystem eintreffendes Detektionssignal in Form des Auftretens des Lichtblitzes eines Störlichtbogens wird mit dem Auslösesignal der Steuereinrichtung über eine erste Bewertungseinrichtung zur Bewertung der Stärke des vom Störlichtbogen herrührenden Überstroms verknüpft. Die Auslöseeinrichtung des Leistungsschalters wird bei Ausgabe eines Abschaltimpulses nur angesteuert, wenn das Signal der Stromerfassungseinrichtung oberhalb einer voreinstellbaren Schwelle liegt.

Allerdings ist auch die Abschaltung eines gewöhnlichen Kurzschlusses mit einem entsprechenden Überstrom und einem Lichtbogen, dem Schaltlichtbogen, verbunden. Sowohl offene als auch kompakte Leistungsschalter erzeugen beim Unterbrechen des Kurzschlussstromes einen Schaltlichtbogen. Zur Unterbrechung des Stromflusses werden Kontakte geöffnet. Ein Schaltlichtbogen entsteht, der mit Hilfe der Löschbleche in den Löschkammern so lange verlängert wird, bis dieser erlischt und somit den Stromfluss final unterbrochen wird. Da bei diesem Abschaltvorgang ein hoher Druck entsteht, muss dieser aus dem Leistungsschalter hinausgeleitet werden um ein Bersten des Leistungsschalters zu verhindern. Bei diesem Ausblasvorgang gelangt eine starke Lichtemission in die Umgebung des Leistungsschalters. Bei Störlichtbogenschutzsystemen sind optische Sensoren zur Detektion des Lichtblitzes im Einsatz. Sind diese optischen Lichtsensoren als photoelektrische Punktsensoren ausgeführt, besteht keine Möglichkeit zwischen Schaltlichtbogen und Störlichtbogen zu differenzieren. Auch der Einsatz von Lichtsensoren auf Basis von Lichtwellenleitern kann nur im Verbund mit anlagenspezifischen Schottungen zwischen Störlichtbogen und Schaltlichtbogen unterscheiden, wobei eine sichere Unterscheidung schwierig ist. Eine Auslösung des Störlichtbogenschutzsystems bei einem Schaltlichtbogen entspricht einer Fehlauslösung, durch die die Anlagenverfügbarkeit reduziert wird. Jede Auslösung eines Leistungsschalters verkürzt dessen Lebensdauer. Wird ein Kurzschließer als erstes Schutzorgan eingesetzt, muss dieser üblicherweise nach Auslösung ausgetauscht werden, was nicht nur zu Austauschkosten führt, sondern auch zu einer erheblich längeren Zeitspanne führt, bis die Anlage wieder betriebsbereit ist. Bei Nachrüstung von Altanlagen ist die Fehlauslösesicherheit gar nur mit erheblichem Aufwand zu realisieren und müsste darüber hinaus für jede Applikation individuell getestet werden, was wirtschaftlich nicht darstellbar ist.

Die US-amerikanische Offenlegungsschrift US 2014 / 192 458 A1 beschreibt ein Lichtbogenüberschlagrelaissystem für die Verwendung in einem Energieverteilungssystem, das einen Lichtbogenüberschlagsensor, eine erste Stromkreisschutzeinrichtung und eine zweite Stromkreisschutzeinrichtung aufweist, wobei zu dem Lichtbogenüberschlagrelaissystem ein erster Eingang, der dazu eingerichtet ist, ein Erfassungs-signal von dem Lichtbogenüberschlagsensor aufzunehmen, ein zweiter Eingang, der dazu ein-gerichtet ist, ein Sperrsignal von der ersten Stromkreisschutzeinrichtung aufzunehmen und eine Steuereinrichtung gehören, die dazu eingerichtet ist zumindest teilweise auf der Grundlage des Erfassungssignals zu ermitteln, ob ein Lichtbogenüberschlag aufgetreten ist, wobei in Reaktion auf die Ermittlung, dass ein Lichtbogenüberschlag aufgetreten ist, die zweite Stromkreisschutz-einrichtung aktiviert wird, wenn die Steuereinrichtung das Sperrsignal aktuell nicht aufnimmt, und in Reaktion auf die Ermittlung, dass ein Lichtbogenüberschlag aufgetreten ist, eine Aktivierung der zweiten Stromkreisschutzeinrichtung verzögert wird, wenn die Steuereinrichtung das Sperrsignal aktuell aufnimmt.

Die internationale Patentanmeldung WO 2014 / 042941 A1 beschreibt die Reduzierung von Fehlauslösungen ist in einem Energieverteilungssystem mit einem vorgeschalteten Leistungsschalter, einer Stromverteilerschiene und eine oder mehrere nachgeschaltete Trennschalter. Ein unerwünschtes Auslösen des vorgeschalteten Leistungsschalters wird vermieden, in dem ein Signal, das eine aktuelle oder anstehende Aktion eines nachgeschalteten Schalters anzeigt, dazu verwendet wird, um eine Verzögerung des vor-geschalteten Leistungsschalters zu erreichen.

In der US-amerikanischen Offenlegungsschrift US 2014 / 055886 A1 wird ein Lichtbogenmanagementsystem mit einem in der Nähe der Leistungsschalters montierten Wandler in einem elektrischen Verteilungssystem beschrieben. Der Wandler ist zum Erfassen und Signalisieren eines Sekundäreffekts eines Überstromereignis innerhalb des Gehäuses des Leistungsschalters geeignet. Der Wandler liefert ein zusätzliches Eingangssignal an ein Lichtbogenfehlererfassungssystem, um Fehlauslösungen zu minimieren. Gemäß der Druckschrift eignet sich das System besonders für Leistungsschalter ohne Elektronik oder dergleichen, d.h. für eine Nachrüstung bestehender Anlagen.

Die deutsche Offenlegungsschrift DE 22 16 238 A1 offenbart eine Einrichtung zum Schutz von gekapselten, mit Druckgas isolierten Schaltanlagen gegen Störlichtbögen in Anlagenteilen, wie Leistungsschalter, Trenner, Wandler, wobei zur Erfassung eines solchen Störlichtbogens ein lichtempfindliches Element innerhalb der Kapselung vorgesehen ist, dessen elektrisches Ausgangssignal ein Relais erregt, welches ein Auslöserelais zur Ausschaltung des betreffenden Schalterteiles erregt, so dass der Störlichtbogen gelöscht wird

Schließlich offenbart die US-amerikanische Offenlegungsschrift US 2010 / 073 830 A1ein elektronisches Gerät, das ein Lichtbogenblitzereignis unter Verwendung einer Zeit-Intensitäts-Vergleichsmetrik detektieren kann, Die Erkennung erfolgt über elektrooptische erzeugte Strahlung in der Nähe des Stromnetzes, Strommessungen oder dergleichen.

Allen offenbarten Detektionseinrichtungen ist gemeinsam, dass die Detektion relativ viel Zeit beansprucht und damit die Entscheidung, ob eine kritische Situation vorliegt und das Störlichtbogenschutzsystem auslösen soll, relativ spät fällt, womit es zu Fehlauslösungen kommen kann.

Aufgabe der Erfindung ist es daher, ein Verfahren zum Auslösen eines Störlichtbogenschutzsystems in einer Schaltanlage anzugeben, wobei die Schaltanlage zumindest einen Leistungsschalter aufweist, mit dem die Fehlauslösesicherheit erhöht wird.

Erfindungsgemäß wird diese Aufgabe durch ein Verfahren mit den Merkmalen des unabhängigen Anspruches 1 gelöst. Vorteilhafte Weiterbildungen des Verfahrens ergeben sich aus den Unteransprüchen 2 bis 9.

Eine weitere Aufgabe der Erfindung besteht darin, eine entsprechende Schaltanlage mit einem Störlichtbogenschutzsystem und einer Vorrichtung zur Auslösung eines Störlichtbogenschutzsystems anzugeben, mit der das erfindungsgemäße Verfahren durchführbar ist.

Diese weitere Aufgabe wird durch eine Vorrichtung nach Anspruch 10 gelöst. Vorteilhafte Ausführungsformen der Vorrichtung ergeben sich aus den Unteransprüchen 11 bis 15.

Gemäß der Erfindung wird bei einem Verfahren zum Auslösen eines Störlichtbogenschutzsystems in einer Schaltanlage mit einem Leistungsschalter wird ein Auslösesignal von dem Störlichtbogenschutzsystems nur ausgegeben, wenn der Lichtbogen optisch erfasst, der Leistungsschalter aber nicht ausgelöst hat.

Der Leistungsschalter ist beispielsweise der Einspeiseschalter einer Schaltanlage, beispielsweise einer Energieverteilungsanlage.

Ein Lichtbogen ist von dem Störlichtbogenschutzsystem optisch erfassbar, wobei ein erstes Signal anliegt, wenn das Störlichtbogenschutzsystem den Lichtbogen optisch erfasst hat. Während in bekannten Störlichtbogenschutzsystemen ein Auslösesignal ausgegeben wird, sobald das erste Signal einer Auslöselogik zugeleitet wird, beinhaltet die Erfindung die Auswertung wenigstens eines zusätzlichen Signals. Unter Berücksichtigung des wenigstens einen zusätzlichen Signals wird das Auslösesignal erzeugt. Das Auslösesignal kann dabei einen Kurzschließer auslösen, mit dem ein metallischer Kurzschluss innerhalb des Störlichtbogenschutzsystems erzeugbar ist. Durch diesen metallischen Kurzschluss wird dem Störlichtbogen die Spannung entzogen, so dass er verlöscht. Der metallische Kurzschluss kann anschließend mit einem konventionellen Schaltgerät, wie beispielsweise einem Leistungsschalter, abgeschaltet werden.

Alternativ kann das Auslösesignal auch einen Leistungsschalter auslösen, wobei in diesem Fall die Zeitspanne bis zum Verlöschen des Störlichtbogens deutlich größer ist als bei der Verwendung eines Kurzschließers. Auslösen eines Schaltorgans wie eines Leistungsschalters bedeutet dabei, dass der Impuls zum Auslösen gegeben wird. Bei einem elektromechanischen Leistungsschalter heißt das beispielsweise, dass ein Verklinkungssystem, das im eingeschalteten Zustand die Schaltkontakte in Kontakt hält, zum Auslösen gebracht wird, woraufhin die Schaltkontakte beginnen zu öffnen. Trotzdem fließt über die Schaltkontakte weiterhin Strom, bis sie in ihrer Öffnungsbewegung soweit fortgeschritten sind, dass die Luftstrecke zwischen ihnen zur Isolierung ausreicht und der Schaltlichtbogen verlöscht. Unter anderem wegen der Massenträgheit vergeht daher eine endliche Zeitspanne, bis der Stromfluß unterbrochen ist.

Das Störlichtbogenschutzsystem weist außer der optischen Erfassung des Lichtbogens zusätzlich eine Erfassungseinrichtung für einen Überstrom auf, wobei ein Auslösesignal von dem Störlichtbogenschutzsystem nur ausgegeben wird, wenn der Lichtbogen optisch erfasst und der Überstrom erfasst wurde, der Leistungsschalter aber nicht ausgelöst hat. Ein zweites Signal liegt an, wenn das Störlichtbogenschutzsystem den Überstrom erfasst hat. In bekannten alternativen Störlichtbogenschutzsystemen wird ein Auslösesignal ausgegeben, wenn das erste und das zweite Signal einer Auslöselogik zugeleitet werden.

Der Leistungsschalter weist eine Löschkammer auf, wobei ein Schaltlichtbogen in der Löschkammer des Leistungsschalters erfassbar ist und wobei bei der Erfassung eines Schaltlichtbogens in der Löschkammer des Leistungsschalters ein viertes Signal erzeugt wird und zur Erkennung des Auslösens des Leistungsschalters das vierte Signal benutzt wird. Somit stellt die Erfassungseinrichtung für den Lichtbogen in der Löschkammer das oben genannte Mittel zur Detektion des Auslösens des Leistungsschalters dar.

In einer erfindungsgemäßen Vorrichtung zum Auslösen eines Störlichtbogenschutzsystems ist ein Mittel vorhanden, mit dem das Auslösen des Leistungsschalters detektierbar ist.

In einer vorteilhaften Ausführungsform weist der Leistungsschalter eine Auswerteelektronik auf, wobei die Auswerteelektronik ein drittes Signal zur Verfügung stellt, wenn der Leistungsschalter auslöst und zur Erkennung des Auslösens des Leistungsschalters das dritte Signal benutzt wird. Dieses dritte Signal kann von dem Leistungsschalter zur Verfügung gestellt werden, noch bevor der eigentliche Abschaltvorgang beginnt, beispielsweise wenn der Befehl zum Auslösen des Verklinkungssystems des Schaltschlosses gegeben wird, der Entklinkungsvorgang selbst aber noch nicht begonnen hat. Somit stellt in dieser Ausführungsform die Auswertelektronik das oben genannte Mittel zur Detektion des Auslösens des Leistungsschalters dar.

In einer besonders vorteilhaften Ausführungsform wird zur Auslösung des Störlichtbogenschutzsystems das dritte Signal benutzt, wobei es invertiert mit dem ersten oder dem ersten und dem zweiten Signal über den logischen Operator UND verknüpft wird. Mit anderen Worten wird das dritte Signal, das von der Auswerteelektronik des Leistungsschalters zur Verfügung gestellt wird, wenn der Leistungsschalter auslöst, negiert mit dem ersten oder dem ersten und dem zweiten Signal über den logischen Operator UND verknüpft, das heißt, dass das Störlichtbogenschutzsystem dann ausgelöst wird, wenn das erste oder das erste und das zweite Signal anliegen, jedoch das dritte Signal nicht anliegt, der Leistungsschalter also nicht ausgelöst hat.

In einer alternativen Ausführungsform wird zur Auslösung des Störlichtbogenschutzsystems das vierte Signal benutzt, wobei es invertiert mit dem ersten oder dem ersten und dem zweiten Signal über den logischen Operator UND verknüpft wird. Mit anderen Worten wird das vierte Signal, das von einer Lichtbogenerfassungseinrichtung in der Löschkammer des Leistungsschalters erzeugt wird, wenn ein Lichtbogen in der Löschkammer des Leistungsschalters auftritt, der somit als Schaltlichtbogen interpretiert wird und als Kriterium dazu dient, zu erkennen, dass der Leistungsschalter ausgelöst hat, negiert mit dem ersten oder dem ersten und dem zweiten Signal über den logischen Operator UND verknüpft, das heißt, dass das Störlichtbogenschutzsystem dann ausgelöst wird, wenn das erste oder das erste und das zweite Signal anliegen, jedoch das vierte Signal nicht anliegt, der Leistungsschalter also nicht ausgelöst hat.

Alternativ können auch das dritte Signal und das vierte Signal benutzt werden, um das Störlichtbogenschutzsystems auszulösen, wobei das dritte und das vierte Signal jeweils invertiert mit dem ersten oder dem ersten und dem zweiten Signal über den logischen Operator UND verknüpft werden. Mit anderen Worten wird bei dieser Ausführungsform das Störlichtbogenschutzsystem nur ausgelöst, wenn das erste oder sowohl das erste und das zweite Signal anliegen und gleichzeitig das dritte und das vierte Signal nicht anliegen.

In weiteren vorteilhaften Ausführungsformen können das Abklingen des dritten und/oder das Abklingen des vierten Signals zeitlich verzögert werden. Das dritte Signal, das der Auswerteelektronik des Leistungsschalters entnommen wird, ist üblicherweise ein kurzer Impuls, während das vierte Signal des Vorhandenseins eines Schaltlichtbogens in der Löschkammer des Leistungsschalters anliegt, solange der Lichtbogen brennt. Das dritte Signal kann aber auch solange anstehen, bis der Abschaltvorgang des Leistungsschalters vollständig abgeschlossen ist, das heißt bis kein Strom mehr fließt. Durch die zeitliche Verzögerung des Abfallens des dritten beziehungsweise des vierten Signals kann verhindert werden, dass das Störlichtbogenschutzsystem innerhalb des Abschaltvorgangs des Leistungsschalters doch noch auslöst, obwohl der Leistungsschalter bereits ausgelöst hat. Aus einem Schaltlichtbogen kann allerdings auch ein Störlichtbogen erwachsen, wenn beispielsweise der Schaltlichtbogen nicht beziehungsweise nicht in der erwarteten Zeit verlöscht oder der Schaltlichtbogen auf einspeiseseitig unter Spannung stehende aktive Teile ausbläst und somit einen Störlichtbogen entzündet. Beispielsweise durch ein Prellen der Kontakte kann der Kontaktabstand immer wieder oder auch dauerhaft minimiert werden beziehungsweise sein, so dass der Lichtbogen dauerhaft brennt, sofern nicht ein weiteres Schaltorgan trafoseitig vor dem Leistungsschalter die Anlage spannungsfrei schaltet. Durch eine entsprechende zeitliche Verzögerung des Abklingens des dritten und/oder vierten Signals können Störlichtbögen, die aus dem Schaltlichtbogen resultieren, im Nachgang zur Kurzschlussabschaltung erfasst und durch Auslösen des Störlichtbogenschutzsystems zum Verlöschen gebracht werden. Damit kann mit dem erfindungsgemäßen Verfahren auch überprüft werden, ob der Schaltlichtbogen in einer zuvor definierten Zeit verlöscht und im Falle, dass dies nicht der Fall ist, ein Auslösesignal für das Störlichtbogenschutzsystem zu erzeugen. Auf diese Art können auch Störlichtbögen, die von einem nicht optimal arbeitenden Leistungsschalter resultieren, beherrscht werden.

Es hat sich weiterhin als vorteilhaft erwiesen, wenn das dritte und/oder das vierte Signal als digitales Signal anliegt. Der Vorteil eines digitalen Signals liegt unter anderem in der Schnelligkeit des Anliegens.

In vorteilhaften Ausführungsform der erfindungsgemäßen Schaltanlage ist zusätzlich ein Überstrom von dem Störlichtbogenschutzsystem erfassbar, wobei ein zweites Signal anliegt, wenn das Störlichtbogenschutzsystem den Überstrom erfasst hat. Die alternative erfindungsgemäße Vorrichtung ist dadurch gekennzeichnet, dass das Störlichtbogenschutzsystem ein Logikglied aufweist, in dem das erste Signal und das zweite Signal mit mindestens einem weiteren Signal, das anzeigt, ob der Leistungsschalter ausgelöst hat, über den logischen Operator UND verknüpfbar ist, wobei das weitere Signal invertiert verarbeitet wird.

In einer vorteilhaften Ausführungsform weist der Leistungsschalter ein Mittel auf, dass das weitere Signal zur Verfügung stellt, wenn der Leistungsschalter ausgelöst hat.

Es hat sich als vorteilhaft herausgestellt, wenn der Leistungsschalter eine Auswerteelektronik aufweist, wobei die Auswerteelektronik ein drittes Signal zur Verfügung stellt, wenn der Leistungsschalter auslöst und wobei das dritte Signal das weitere Signal darstellt.

Es hat sich als vorteilhaft erwiesen, wenn das Logikglied dazu ausgebildet ist, das erste Signal oder das erste Signal und das zweite Signal mit dem invertierten Wert des dritten und/oder dem invertierten Wert des vierten Signals über den logischen Operator UND zu verknüpfen. Dabei wird ein Auslösesignal von dem Logikglied nur ausgegeben, wenn das erste oder das erste und das zweite Signal anliegen, das dritte und/oder vierte Signal aber nicht anliegen.

Weiterhin hat es sich als vorteilhaft erwiesen, wenn die Vorrichtung weiterhin ein Verzögerungsglied aufweist, das zur Verzögerung des Abklingens des dritten und/oder vierten Signals ausgebildet ist. Durch eine entsprechende zeitliche Verzögerung des Abklingens des dritten und/oder vierten Signals können Störlichtbögen, die aus dem Schaltlichtbogen resultieren, im Nachgang zur Kurzschlussabschaltung erfasst und durch Auslösen des Störlichtbogenschutzsystems zum Verlöschen gebracht werden.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: den schematischen Aufbau eines Teils einer beispielhaften Schaltanlage mit Leistungsschalter und einem Teil eines Störlichtbogenschutzsystems,
- Fig. 2: den schematischen Aufbau eines Teils einer Schaltanlage mit Leistungsschalter und einem Teil eines Störlichtbogenschutzsystems in einer ersten Ausführungsform der Erfindung,
- Fig. 3: den schematischen Aufbau eines Teils einer weiteren beispielhaften Schaltanlage mit Leistungsschalter und einem Teil eines Störlichtbogenschutzsystems,
- Fig. 4: den schematischen Aufbau eines Teils einer Schaltanlage mit Leistungsschalter und einem Teil eines Störlichtbogenschutzsystems in einer zweiten Ausführungsform.

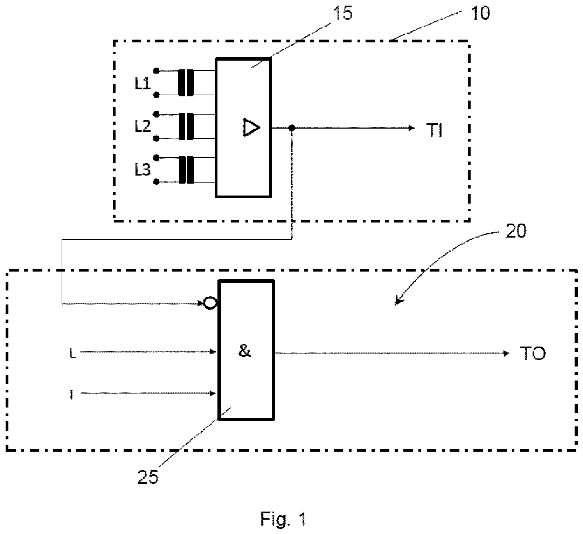

Fig. 1 zeigt den schematischen Aufbau eines Teils einer beispielhaften Schaltanlage mit Leistungsschalter 10 und einem Teil eines Störlichtbogenschutzsystems 20. Ein Leistungsschalter 10 ist als Schutzorgan dazu ausgebildet, eine Schaltanlage oder die jeweiligen Verbraucher im Fehlerfall von der Energieversorgung zu trennen. Dargestellt ist die Stromerfassung eines dreiphasigen Leistungsschalters mit den Phasen L1, L2 und L3. Zur Auslösung weist er eine Auslöseelektronik 15 auf, aus der ein drittes Signal TI abgreifbar ist. Das Störlichtbogenschutzsystem 20 weist ein Logikglied 25 auf, dem ein erstens Signal L zugeführt wird, das anliegt, wenn das Störlichtbogenschutzsystem 20 einen Lichtbogen detektiert hat. Zur Detektion des Lichtbogens kann das Störlichtbogenschutzsystem 20 über eine oder mehrere Photodioden verfügen. Ebenso ist es möglich, einen Lichtleiter in der Anlage zu verlegen, der radial einfallendes Licht in axialer Richtung leitet, wobei an einem Ende des Lichtleiters eine Photodiode vorgesehen ist. Dadurch kann jeder Störlichtbogen detektiert werden, der an einer Stelle auftritt, die nicht von dem Lichtleiter abgeschottet ist.

Weiterhin wird dem Logikglied 25 ein zweites Signal I zugeleitet, das in dem Störlichtbogenschutzsystem 20 erzeugt wird, wenn ein Stromfluss festgestellt wird, der über einer zuvor definierten Schwelle liegt. Dazu kann der fließende Strom beispielsweise mit einer Rogowskispule detektiert werden.

Erfindungsgemäß wird dem Logikglied ein drittes Signal TI in invertierter Form zugeleitet. Das dritte Signal TI wird dabei aus der Auswerteelektronik 15 des Leistungsschalters 10 abgegriffen. Das dritte Signal TI ist hoch, sobald die Auswerteelektronik den Abschaltbefehl absetzt, der den Leistungsschalter 10 zur Auslösung bringt.

In dem Logikglied 25 werden die drei Signale L, I, TI über eine UND-Verknüpfung logisch miteinander verknüpft, wobei das dritte Signal TI in invertierter Form verarbeitet wird. Das Logikglied 25 gibt ein Auslösesignal TO aus, wenn die UND-Verknüpfung den Wert WAHR ausgibt. Mit anderen Worten gibt das Logikglied 25 ein Auslösesignal TO aus, wenn das Störlichtbogenschutzsystem 25 einen Lichtbogen und einen Überstrom detektiert hat, der Leistungsschalter 10 aber nicht ausgelöst hat.

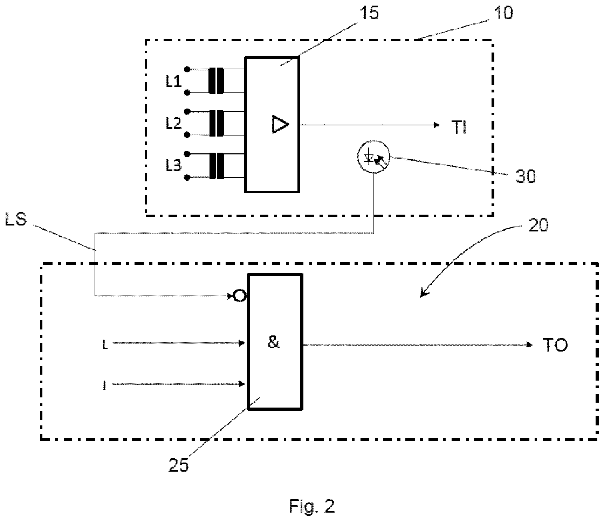

Fig. 2 zeigt den schematischen Aufbau eines Teils einer Schaltanlage mit Leistungsschalter 10 und einem Teil eines Störlichtbogenschutzsystems 20 in einer ersten Ausführungsform. In dieser Ausführungsform weist der Leistungsschalter 10 eine Erfassungseinrichtung 30 auf, mit der ein Lichtbogen in der Löschkammer des Leistungsschalters 10 erfassbar ist. Im Stand der Technik bekannte Leistungsschalter weisen Schaltkontakte auf, die im geschlossenen Zustand Strom führen können und die öffnenbar sind, um den Stromfluß zu unterbrechen, wobei ein Schaltlichtbogen entsteht. Weiterhin weisen bekannte Leistungsschalter eine Löschkammer auf, in der der Schaltlichtbogen aufgeteilt und gekühlt wird, wodurch er verlöscht. Wird in einen solchen Leistungsschalter eine optische Erfassungseinrichtung 30 für einen Lichtbogen, beispielsweise eine Photodiode so eingebaut, dass sie den Schaltlichtbogen erfassen kann, gibt die Erfassungseinrichtung 30 ein viertes Signal LS aus, wenn sie den Schaltlichtbogen erfasst. Beispielsweise kann die Erfassungseinrichtung 30 in die Löschkammer des Leistungsschalters 10 eingebaut sein. Dabei stellt das vierte Signal LS ein Signal dafür dar, dass der Leistungsschalter 10 ausgelöst hat. Dieses vierte Signal LS wird in der in Fig. 2 gezeigten Ausführungsform dem Logikglied 25 des Störlichtschutzsystems 20 in zugeführt, wo es in invertierter Form mit dem ersten Signal L und dem zweiten Signal I über eine UND-Verknüpfung logisch verknüpft wird. Das Logikglied 20 gibt dabei den Wert WAHR aus, wenn das erste Signal L und das zweite Signal I hoch sind, das vierte Signal LS jedoch niedrig ist, also das invertierte vierte Signal LS ebenfalls hoch ist. Mit anderen Worten gibt das Logikglied 25 ein Auslösesignal TO aus, wenn das Störlichtbogenschutzsystem 25 einen Lichtbogen und einen Überstrom detektiert hat, der Leistungsschalter 10 aber nicht ausgelöst hat.

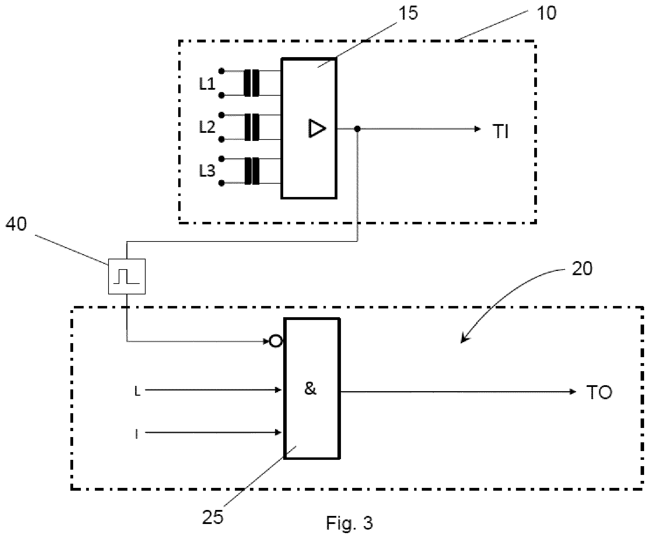

In Fig. 3 ist ein schematischen Aufbau eines Teils einer weiteren beispielhaften Schaltanlage mit Leistungsschalter 10 und einem Teil eines Störlichtbogenschutzsystems 20 gezeigt. Die Schaltanlage entspricht weitestgehend der in Fig. 1 gezeigten. Im Unterschied zu der in Fig. 1 gezeigten Schaltanlage wird aber das Abfallen des dritten Signals TI über ein Verzögerungsglied 40 zeitlich verzögert. Das dritte Signal TI, das der Auswerteelektronik des Leistungsschalters 10 entnommen wird, ist üblicherweise ein kurzer Impuls. Das dritte Signal TI kann aber auch solange anstehen, bis der Abschaltvorgang des Leistungsschalters 10 vollständig abgeschlossen ist, das heißt bis kein Strom mehr fließt. Durch die zeitliche Verzögerung des Abfallens des dritten Signals TI kann verhindert werden, dass das Störlichtbogenschutzsystem 20 innerhalb des Abschaltvorgangs des Leistungsschalters 10 doch noch auslöst, obwohl der Leistungsschalter 10 bereits ausgelöst hat. Durch eine entsprechende zeitliche Verzögerung des Abklingens des dritten Signals TI können Störlichtbögen, die aus dem Schaltlichtbogen resultieren, im Nachgang zur Kurzschlussabschaltung erfasst und durch Auslösen des Störlichtbogenschutzsystems 20 zum Verlöschen gebracht werden.

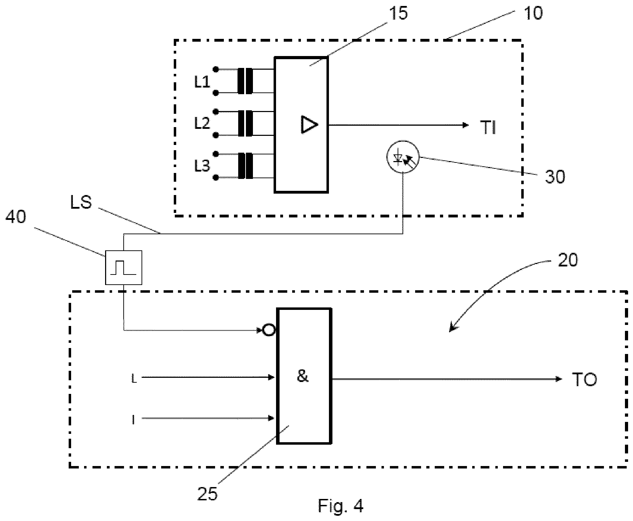

In Fig. 4 ist ein schematischen Aufbau eines Teils einer Schaltanlage mit Leistungsschalter 10 und einem Teil eines Störlichtbogenschutzsystems 20 in einer zweiten Ausführungsform gezeigt. Die Ausführungsform entspricht weitestgehend der in Fig. 2 gezeigten. Im Unterschied zu der in Fig. 2 gezeigten Ausführungsform wird aber das Abfallen des vierten Signals LS über ein Verzögerungsglied 40 zeitlich verzögert. Das vierte Signal LS steht üblicherweise solange an, wie der Schaltlichtbogen brennt. Mit anderen Worten fällt das vierte Signal LS ab, wenn kein Schaltlichtbogen mehr brennt und somit kein Strom mehr fließt. Durch eine entsprechende zeitliche Verzögerung des Abklingens des vierten Signals LS können Störlichtbögen, die aus dem Schaltlichtbogen resultieren, im Nachgang zur Kurzschlussabschaltung erfasst und durch Auslösen des Störlichtbogenschutzsystems 20 zum Verlöschen gebracht werden.

### Bezugszeichenliste:

- 10: Leistungsschalter
- 15: Auswerteelektronik
- 20: Störlichtbogenschutzsystem
- 25: Logikglied
- 30: Erfassungseinrichtung
- 40: Verzögerungsglied
- L1, L2, L3: Phasen
- L: erstes Signal
- I: zweites Signal
- TI: drittes Signal
- LS: viertes Signal
- TO: Auslösesignal

## Patentansprüche

1. Verfahren zum Auslösen eines Störlichtbogenschutzsystems (20) in einer Schaltanlage, wobei die Schaltanlage zumindest einen Leistungsschalter (10) mit einer Löschkammer aufweist und ein Lichtbogen von dem Störlichtbogenschutzsystem (20) optisch erfassbar ist, wobei ein erstes Signal (L) anliegt, wenn das Störlichtbogenschutzsystem (20) den Lichtbogen optisch erfasst hat, und wobei ein Überstrom von dem Störlichtbogenschutzsystem (20) erfassbar ist, wobei ein zweites Signal (I) anliegt, wenn das Störlichtbogenschutzsystem (20) den Überstrom erfasst hat, wobei ein Auslösesignal (TO) von dem Störlichtbogenschutzsystem (20) nur ausgegeben wird, wenn der Lichtbogen optisch erfasst und der Überstrom erfasst wurde, der Leistungsschalter (10) aber nicht ausgelöst hat,
wobei ein Schaltlichtbogen in der Löschkammer des Leistungsschalters (10) über eine Lichtbogenerfassungseinrichtung (30) erfassbar ist, wobei bei der Erfassung eines Schaltlichtbogens in der Löschkammer des Leistungsschalters (10) ein viertes Signal (LS) erzeugt wird und zur Erkennung des Auslösens des Leistungsschalters (10) das vierte Signal (LS) benutzt wird,
**dadurch gekennzeichnet, dass**
die Lichtbogenerfassungseinrichtung (30) in der Löschkammer des Leistungsschalters (10) angeordnet ist.

2. Verfahren nach Anspruch 1,
**dadurch gekennzeichnet,**
**dass** der Leistungsschalter (10) eine Auswerteelektronik (15) aufweist, wobei die Auswerteelektronik (15) ein drittes Signal (TI) zur Verfügung stellt, wenn der Leistungsschalter (10) auslöst und zur Erkennung des Auslösens des Leistungsschalters (10) das dritte Signal (TI) benutzt wird.

3. Verfahren nach Anspruch 2 ,
**dadurch gekennzeichnet,**
**dass** das dritte Signal (TI) invertiert mit dem ersten Signal (L) oder dem ersten Signal (L) und dem zweiten Signal (I) über den logischen Operator UND verknüpft wird.

4. Verfahren nach Anspruch 1,
**dadurch gekennzeichnet,**
**dass** das vierte Signal (LS) invertiert mit dem ersten Signal (L) oder dem ersten Signal (L) und dem zweiten Signal (I) über den logischen Operator UND verknüpft wird.

5. Verfahren nach den Ansprüchen 1 und 2,
**dadurch gekennzeichnet,**
**dass** zur Auslösung des Störlichtbogenschutzsystems (20) das dritte Signal (TI) und das vierte Signal (LS) benutzt werden, wobei das dritte Signal (TI) und das vierte Signal (LS) jeweils invertiert mit dem ersten Signal (L) oder dem ersten Signal (L) und dem zweiten Signal (I) über den logischen Operator UND verknüpft werden.

6. Verfahren nach Anspruch 2, 3 oder 5,
**dadurch gekennzeichnet,**
**dass** das Abklingen des dritten Signals (TI) zeitlich verzögert wird.

7. Verfahren nach Anspruch 1, 3 oder 5,
**dadurch gekennzeichnet,**
**dass** das Abklingen des vierten Signals (LS) zeitlich verzögert wird.

8. Verfahren nach Anspruch 5,
**dadurch gekennzeichnet,**
**dass** das Abklingen des dritten Signals (TI) und des vierten Signals (LS) zeitlich verzögert wird.

9. Verfahren nach einem der Ansprüche 2 bis 8,
**dadurch gekennzeichnet,**
**dass** das dritte Signal (TI) und/oder das vierte Signal (LS) als digitales Signal (TI, LS) anliegt.

10. Schaltanlage mit einem Störlichtbogenschutzsystem (20) und einer Vorrichtung zum Auslösen des Störlichtbogenschutzsystems (20), wobei die Schaltanlage zumindest einen Leistungsschalter (10) aufweist und ein Lichtbogen von dem Störlichtbogenschutzsystem (20) optisch erfassbar ist, wobei ein erstes Signal (L) anliegt, wenn das Störlichtbogenschutzsystem (20) den Lichtbogen optisch erfasst hat,
wobei das Störlichtbogenschutzsystem (20) ein Logikglied (25) aufweist, in dem das erste Signal (L) mit mindestens einem weiteren Signal (TI, LS), das anzeigt, ob der Leistungsschalter (10) ausgelöst hat, über den logischen Operator UND verknüpfbar ist, wobei das weitere Signal (TI, LS) invertiert verarbeitet wird, wobei der Leistungsschalter (10) eine Lichtbogenerfassungseinrichtung (30) zur Erfassung eines Lichtbogens in einer Löschkammer des Leistungsschalters (10) aufweist und die Lichtbogenerfassungseinrichtung (30) ein viertes Signal (LS) zur Verfügung stellt, wenn der Lichtbogen in der Löschkammer des Leistungsschalters (10) auftritt und das vierte Signal (LS) das weitere Signal darstellt,
**dadurch gekennzeichnet, dass**
die Lichtbogenerfassungseinrichtung (30) in der Löschkammer des Leistungsschalters (10) angeordnet ist.

11. Vorrichtung gemäß Anspruch 10, wobei zusätzlich ein Überstrom von dem Störlichtbogenschutzsystem (20) erfassbar ist, wobei ein zweites Signal (I) anliegt, wenn das Störlichtbogenschutzsystem (20) den Überstrom erfasst hat, **dadurch gekennzeichnet,**
**dass** das Störlichtbogenschutzsystem (20) ein Logikglied (25) aufweist, in dem das erste Signal (L) und das zweite Signal (I) mit mindestens einem weiteren Signal (TI, LS), das anzeigt, ob der Leistungsschalter (10) ausgelöst hat, über den logischen Operator UND verknüpfbar ist, wobei das weitere Signal (TI, LS) invertiert verarbeitet wird.

12. Vorrichtung gemäß einem der Ansprüche 10 oder 11,
**dadurch gekennzeichnet,**
**dass** der Leistungsschalter (10) eine Auswerteelektronik (15) aufweist, wobei die Auswerteelektronik (15) ein drittes Signal (TI) zur Verfügung stellt, wenn der Leistungsschalter (10) auslöst und das dritte Signal (TI) das weitere Signal darstellt.

13. Vorrichtung gemäß den Ansprüchen 10 bis 12,
**dadurch gekennzeichnet,**
**dass** das Logikglied (25) dazu ausgebildet ist, das erste Signal (L) und/oder das zweite Signal (I) mit dem invertierten Wert des dritten Signals (TI) und/oder dem invertierten Wert des vierten Signals (LS) über den logischen Operator UND zu verknüpfen.

14. Vorrichtung gemäß einem der Ansprüche 10 bis 13,
**dadurch gekennzeichnet,**
**dass** die Vorrichtung weiterhin ein Verzögerungsglied (40) aufweist, das zur Verzögerung des Abklingens des dritten Signals (TI) und/oder vierten Signals (LS) ausgebildet ist.

## Claims

1. Method for triggering an arc flash protection system (20) in a switching system, the switching system having at least one power switch (10) having an arcing chamber, and an arc being optically detectable by the arc flash protection system (20), a first signal (L) being present when the arc flash protection system (20) has optically detected the arc, and an overcurrent being detectable by the arc flash protection system (20), a second signal (I) being present when the arc flash protection system (20) has detected the overcurrent, a trigger signal (TO) only being outputted by the arc flash protection system (20) when the arc has been optically detected and the overcurrent has been detected but the power switch (10) has not triggered, a switching arc in the arcing chamber of the power switch (10) being detectable by way of an arc detection device (30), a fourth signal (LS) being generated when a switching arc is detected in the arcing chamber of the power switch (10) and the fourth signal (LS) being used for detecting the triggering of the power switch (10),
**characterised in that**
the arc detection device (30) is arranged in the arcing chamber of the power switch (10).

2. Method according to claim 1,
**characterised**
**in that** the power switch (10) has evaluation electronics (15), the evaluation electronics (15) providing a third signal (TI) when the power switch (10) triggers and the third signal (TI) being used for detecting the triggering of the power switch (10) .

3. Method according to claim 2,
**characterised**
**in that** the third signal (TI), inverted, is linked, via the logical operator AND, to the first signal (L) or the first signal (L) and the second signal (I).

4. Method according to claim 1,
**characterised**
**in that** the fourth signal (LS), inverted, is linked, via the logical operator AND, to the first signal (L) or the first signal (L) and the second signal (I).

5. Method according to claims 1 and 2,
**characterised**
**in that** the third signal (TI) and the fourth signal (LS) are used for triggering the arc flash protection system (20), the third signal (TI) and the fourth signal (LS), each inverted, being linked, via the logical operator AND, to the first signal (L) or the first signal (L) and the second signal (I).

6. Method according to claim 2, 3 or 5,
**characterised**
**in that** the decay of the third signal (TI) is temporally delayed.

7. Method according to claim 1, 3 or 5,
**characterised**
**in that** the decay of the fourth signal (LS) is temporally delayed.

8. Method according to claim 5,
**characterised**
**in that** the decay of the third signal (TI) and the fourth signal (LS) is temporally delayed.

9. Method according to any of claims 2 to 8,
**characterised**
**in that** the third signal (TI) and/or the fourth signal (LS) are present as digital signals (TI, LS).

10. Switching system, comprising an arc flash protection system (20) and a device for triggering the arc flash protection system (20), the switching system having at least one power switch (10), and an arc being optically detectable by the arc flash protection system (20), a first signal (L) being present when the arc flash protection system (20) has optically detected the arc,
the arc flash protection system (20) having a logic element (25) in which the first signal can be linked, via the logical operator AND, to at least one further signal (TI, LS) displaying whether the power switch (10) has triggered, the further signal (TI, LS) being processed inverted, the power switch (10) having an arc detection device (30) for detecting an arc in an arcing chamber of the power switch (10), and the arc detection device (30) providing a fourth signal (LS) when the arc occurs in the arcing chamber of the power switch (10), and the fourth signal (LS) constituting the further signal,
**characterised**
**in that** the arc detection device (30) is arranged in the arcing chamber of the power switch (10).

11. Device according to claim 10, an overcurrent additionally being detectable by the arc flash protection system (20), a second signal (I) being present when the arc flash protection system (20) has detected the overcurrent,
**characterised**
**in that** the arc flash protection system (20) has a logic element (25) in which the first signal (L) and the second signal (I) can be linked, via the logical operator AND, to at least one further signal (TI, LS) displaying whether the power switch (10) has triggered, the further signal (TI, LS) being processed inverted.

12. Device according to either claim 10 or claim 11,
**characterised**
**in that** the power switch (10) has evaluation electronics (15), the evaluation electronics (15) providing a third signal (TI) when the power switch (10) triggers, and the third signal (TI) constituting the further signal.

13. Device according to claims 10 to 12,
**characterised**
**in that** the logic element (25) is configured to link the first signal (L) and/or the second signal (I), via the logical operator AND, to the inverted value of the third signal (TI) and/or the inverted value of the fourth signal (LS).

14. Device according to any of claims 10 to 13,
**characterised**
**in that** the device further has a delay element (40) configured to delay the decay of the third signal (TI) and/or fourth signal (LS).

## Revendications

1. Procédé de déclenchement d'un système de protection contre les arcs électriques parasites (20) dans une installation de distribution électrique, dans lequel l'installation de distribution électrique présente au moins un disjoncteur (10) avec une chambre d'extinction et un arc électrique peut être détecté optiquement par le système de protection contre les arcs électriques parasites (20), dans lequel un premier signal (L) est présent lorsque le système de protection contre les arcs électriques parasites (20) a détecté optiquement l'arc électrique et dans lequel une surintensité peut être détectée par le système de protection contre les arcs électriques parasites (20), dans lequel un deuxième signal (I) est présent lorsque le système de protection contre les arcs électriques parasites (20) a détecté la surintensité, dans lequel un signal de déclenchement (TO) est émis par le système de protection contre les arcs électriques parasites (20) uniquement lorsque l'arc électrique a été détecté optiquement et que la surintensité a été détectée, mais que le disjoncteur (10) ne s'est pas déclenché,
dans lequel un arc électrique de commutation dans la chambre d'extinction du disjoncteur (10) peut être détecté par un moyen de détection d'arc électrique (30), dans lequel un quatrième signal (LS) est généré lorsqu'un arc électrique de commutation est détecté dans la chambre d'extinction du disjoncteur (10) et le quatrième signal (LS) est utilisé pour détecter le déclenchement du disjoncteur (10),
**caractérisé en ce que**
le moyen de détection d'arc électrique (30) est disposé dans la chambre d'extinction du disjoncteur (10).

2. Procédé selon la revendication 1,
**caractérisé en ce**
**que** le disjoncteur (10) présente une électronique d'évaluation (15), dans lequel l'électronique d'évaluation (15) fournit un troisième signal (TI) lors du déclenchement du disjoncteur (10) et le troisième signal (TI) est utilisé pour détecter le déclenchement du disjoncteur (10).

3. Procédé selon la revendication 2,
**caractérisé en ce**
**que** le troisième signal (TI) est combiné sous forme inversée avec le premier signal (L) ou le premier signal (L) et le deuxième signal (I) au moyen de l'opérateur logique ET.

4. Procédé selon la revendication 1,
**caractérisé en ce**
**que** le quatrième signal (LS) est combiné sous forme inversée avec le premier signal (L) ou le premier signal (L) et le deuxième signal (I) au moyen de l'opérateur logique ET.

5. Procédé selon les revendications 1 et 2,
**caractérisé en ce**
**que** le troisième signal (TI) et le quatrième signal (LS) sont utilisés pour déclencher le système de protection contre les arcs électriques parasites (20), dans lequel le troisième signal (TI) et le quatrième signal (LS) sont chacun combinés sous forme inversée avec le premier signal (L) ou le premier signal (L) et le deuxième signal (I) au moyen de l'opérateur logique ET.

6. Procédé selon la revendication 2, 3 ou 5,
**caractérisé en ce**
**que** la décroissance du troisième signal (TI) est retardée dans le temps.

7. Procédé selon la revendication 1, 3 ou 5,
**caractérisé en ce**
**que** la décroissance du quatrième signal (LS) est retardée dans le temps.

8. Procédé selon la revendication 5,
**caractérisé en ce**
**que** la décroissance du troisième signal (TI) et du quatrième signal (LS) est retardée dans le temps.

9. Procédé selon l'une des revendications 2 à 8,
**caractérisé en ce**
**que** le troisième signal (TI) et/ou le quatrième signal (LS) sont présents sous la forme de signaux numériques (TI, LS).

10. Installation de distribution électrique comportant un système de protection contre les arcs électriques parasites (20) et un dispositif pour déclencher le système de protection contre les arcs électriques parasites (20), dans laquelle l'installation de distribution électrique présente au moins un disjoncteur (10) et un arc peut être détecté optiquement par le système de protection contre les arcs électriques parasites (20), dans laquelle un premier signal (L) est présent lorsque le système de protection contre les arcs électriques parasites (20) a détecté optiquement l'arc électrique,
dans laquelle le système de protection contre les arcs électriques (20) présente un élément logique (25) dans lequel le premier signal (L) peut être combiné avec au moins un autre signal (TI, LS), qui indique si le disjoncteur (10) s'est déclenché, au moyen de l'opérateur logique ET, l'autre signal (TI, LS) étant traité sous forme inversée, dans laquelle le disjoncteur (10) présente un moyen de détection d'arc électrique (30) pour détecter un arc électrique dans une chambre d'extinction du disjoncteur (10) et le moyen de détection d'arc électrique (30) fournit un quatrième signal (LS) lorsque l'arc électrique se produit dans la chambre d'extinction du disjoncteur (10) et le quatrième signal (LS) représente l'autre signal,
**caractérisée en ce que**
le moyen de détection d'arc électrique (30) est disposé dans la chambre d'extinction du disjoncteur (10).

11. Dispositif selon la revendication 10, dans lequel une surintensité peut en outre être détectée par le système de protection contre les arcs électriques parasites (20), dans lequel un deuxième signal (I) est présent lorsque le système de protection contre les arcs électriques parasites (20) a détecté la surintensité,
**caractérisé en ce**
**que** le système de protection contre les arcs électriques (20) présente un élément logique (25) dans lequel le premier signal (L) et le deuxième signal (I) peuvent être combinés avec au moins un autre signal (TI, LS), qui indique si le disjoncteur (10) s'est déclenché, au moyen de l'opérateur logique ET, l'autre signal (TI, LS) étant traité sous forme inversée.

12. Dispositif selon l'une des revendications 10 ou 11,
**caractérisé en ce**
**que** le disjoncteur (10) présente une électronique d'évaluation (15), dans lequel l'électronique d'évaluation (15) fournit un troisième signal (TI) lors du déclenchement du disjoncteur (10) et le troisième signal (TI) représente l'autre signal.

13. Dispositif selon les revendications 10 à 12,
**caractérisé en ce**
**que** l'élément logique (25) est conçu pour combiner le premier signal (L) et/ou le deuxième signal (I) avec la valeur inversée du troisième signal (TI) et/ou la valeur inversée du quatrième signal (LS) au moyen de l'opérateur logique ET.

14. Dispositif selon l'une des revendications 10 à 13,
**caractérisé en ce**
**que** le dispositif présente en outre un élément de retard (40) qui est conçu pour retarder la décroissance du troisième signal (TI) et/ou du quatrième signal (LS).
